# FASCICULE DE BREVET EUROPEEN

(11) **EP 0 728 810 B1**
(45) Date de publication et mention de la délivrance du brevet: **22.05.2002**
(21) Numéro de dépôt: 96101578.1
(22) Date de dépôt: 05.02.1996
(51) Int. Cl.: C08L 57/00, C09D 157/00, C08J 7/04, B60C 13/00

(54) **Procédé de protection antimigration et antiozone de la surface d'un pneumatique**
Verfahren zum Schutz von Reifen vor Ozon und ausschwitzenden Verbindugen
Method for the protection of tires against ozone and migrating additives

(30) Priorité: 22.02.1995 FR 9502151; 30.10.1995 FR 9512913
(43) Date de publication de la demande: 28.08.1996
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: Chauffour, Christian, F-63000 Clermont-Ferrand (FR); Cohen, Patrick, F-63830 Durtol (FR); Cottin, Alain, F-63100 Clermont-Ferrand (FR); Peyron, Georges, F-63200 Riom (FR)
(74) Mandataire: Bauvir, Jacques

(56) Documents cités:
- WO-A-95/09210
- DE-A- 1 936 830
- FR-A- 2 433 032
- US-A- 4 331 738
- US-A- 5 258 424
- PATENT ABSTRACTS OF JAPAN vol. 017, no. 594 (C-1126), 29 octobre 1993 & JP 05 179092 A (MITSUI TOATSU CHEM INC), 20 juillet 1993,

## Description

L'invention concerne l'état de surface des pneumatiques et particulièrement leur protection contre les conséquences des migrations vers la surface des divers agents antioxydants et antiozonants qu'ils contiennent.

On sait que certains polymères, et en particulier les compositions caoutchoutiques vulcanisées à base de polymères diéniques comportant des doubles liaisons éthyléniques dans leur chaîne principale sont très sensibles à l'action de l'ozone.

Lorsqu'un article réalisé avec une telle composition élastomère diénique est soumis à l'action d'une contrainte en présence d'ozone, l'action néfaste de l'ozone se manifeste par l'apparition de craquelures de surface orientées perpendiculairement au sens de la contrainte. Si cette contrainte subsiste ou chaque fois qu'elle se produit les craquelures se développent et peuvent causer la rupture complète de l'article.

Pour limiter cette dégradation, les compositions élastomères incorporent couramment des composés chimiques antiozone ainsi que des cires. Les composés chimiques antiozone ralentissent la formation et la propagation des fissures dans des conditions de sollicitations statiques et dynamiques. Les cires apportent un complément de protection en statique par la formation d'un revêtement protecteur en surface.

Ces moyens de lutte contre la dégradation due à l'ozone ont prouvé leur efficacité. Malheureusement, les composés antiozone les plus efficaces se caractérisent aussi par une très forte aptitude à migrer à travers leur substrat polymérique et à venir tacher et colorer les surfaces adjacentes. Par exemple, on voit apparaître à la surface des flancs des pneumatiques des taches jaunâtres ou marron. Ce phénomène est appelé "coloration". La migration en surface des cires modifie aussi l'aspect extérieur des surfaces des compositions élastomères en la rendant terne et grise. On appelle ce phénomène l'"efflorescence" des cires.

Ces migrations sont particulièrement dommageables dans le cas des pneumatiques "à flancs blancs", mais elles peuvent aussi sérieusement pénaliser l'aspect esthétique des pneumatiques "à flancs noirs" qui voient leurs surfaces extérieures passer d'un aspect brillant à terne et grisâtre.

Pour préserver l'aspect esthétique des flancs blancs des pneumatiques jusqu'au moment de leur mise en service, on utilise usuellement des revêtements de protection. Ces revêtements sont appliqués sur les flancs après la fabrication des pneumatiques. Ils sont principalement réalisés à base d'alcool polyvinylique ("PVA") assoupli par des plastifiants et comprennent des agents "barrières", par exemple des particules de mica, pour ralentir la migration jusqu'à la surface de ces agents chimiques antiozone et de ces cires. Le brevet US5149591 décrit l'un de ces revêtements de protection. Mais ces revêtements sont visibles, épais, ont une résistance mécanique limitée et doivent être enlevés avant la mise en service effective des pneumatiques. La présente invention se propose de résoudre ces problèmes.

Le comportement mécanique des polymères non réticulés varie en fonction de la température, d'une zone vitreuse aux basses températures, où le comportement est vitreux, c'est-à-dire rigide et cassant, à une zone d'écoulement fluide aux températures élevées. Entre ces deux zones se trouve une zone appelée "plateau caoutchoutique" où le comportement est caoutchoutique, c'est-à-dire proche de celui d'un élastomère, dès que la masse moléculaire du polymère est suffisante pour qu'il y ait des enchevêtrements (voir : "Viscoelastic Properties of Polymers", John D. Ferry, 3rd. ed, John Wiley & Sons, 1980, notamment les chapitres 10, 12 et 13).

On appelle "température de transition vitreuse" d'un polymère ("Tg") la température où le comportement mécanique du polymère évolue de ce comportement vitreux, rigide et cassant, à ce comportement caoutchoutique. Cette température de transition vitreuse est une caractéristique essentielle des polymères.

On détermine usuellement les températures de transition vitreuse par analyse enthalpique différentielle (voir Introduction to Thermal Analysis : techniques and applications - Michael E. Brown - Ed. Chapman and Hall - New York 1988). Cette technique, plus connue sous les initiales DSC (Differential Scanning Calorimetry), consiste à déterminer les variations de chaleur spécifique d'un échantillon dont on élève la température. Elle permet de mettre en évidence des transitions ou des réactions qui s'accompagnent de libération d'énergie (exothermique) ou d'absorption d'énergie (endothermique). La transition vitreuse est une transition endothermique.

L'invention a pour objet un procédé de protection antimigrations et antiozone de la surface d'un pneumatique par application d'une composition aqueuse destinée à former un revêtement de protection antimigrations et antiozone sur la surface extérieure d'un pneumatique, ce revêtement étant tel qu'il ne doive pas être enlevé à la mise en service effective de ces pneumatiques.

Le procédé selon l'invention est tel que :
- on applique sur la surface du pneumatique une couche mince d'une composition aqueuse selon l'invention, comprenant une émulsion aqueuse d'au moins :
   (a) un polymère appelé constituant I, ledit constituant I étant un homopolymère ou un copolymère à base d'au moins un monomère choisi dans le groupe des esters acryliques, méthacryliques et vinyliques, et ayant une température de transition vitreuse inférieure à 0°C; et
   (b) un constituant II choisi dans le groupe constitué par une silice hydrophile et un homopolymère ou un copolymère à base d'au moins un monomère choisi dans le groupe des monomères acryliques, méthacryliques et vinyliques, ledit homopolymère ou copolymère ayant une température de transition vitreuse supérieure à 25°C ; et.
- on laisse sécher la couche jusqu'à la formation d'un revêtement tel que l'épaisseur du revêtement est comprise entre 1 et 30 µm.

Avantageusement, le constituant I a une température de transition vitreuse inférieure à -15°C.

Le constituant I choisi peut, notamment, être un copolymère d'acrylate de butyle et de styrène avec une teneur en poids de styrène de l'ordre de 20 %. La température de transition vitreuse d'un tel polymère est de - 21°C.

Une telle composition aqueuse permet de former un revêtement continu, souple et adhérent sur la surface du pneumatique même en l'absence de plastifiant. Ce revêtement s'oppose aux migrations jusqu'à la surface de tous les agents antiozone présents dans les mélanges caoutchoutiques du pneumatique sans qu'il soit nécessaire d'ajouter un agent barrière tel du mica et il s'oppose par sa présence aux dégradations dues à l'ozone. Le comportement caoutchoutique du revêtement obtenu lui permet de résister à toutes les déformations subies entre la fabrication et la commercialisation des pneumatiques, et même ultérieurement.

La présence du constituant II permet de réduire le caractère collant qu'aurait un revêtement formé avec comme seul constituant principal le constituant I précédent. Ce caractère collant est préjudiciable à la résistance mécanique du revêtement et le rend sensible aux poussières et salissures car il s'encrasse facilement.

Le constituant II peut être une silice hydrophile avec une teneur en poids comprise entre 5 et 25 parties pour 100 parties de polymère sec. Préférentiellement, la teneur de silice est entre 10 et 15 parties. En plus de l'action sur le caractère collant, la silice renforce les propriétés mécaniques du revêtement formé.

Selon une variante de réalisation, le constituant II est un homopolymère ou un copolymère à base d'au moins un monomère choisi dans le groupe des monomères acryliques, méthacryliques et vinyliques, ledit constituant II ayant une température de transition vitreuse supérieure à 25°C.

Un tel constituant II peut, notamment, être un copolymère ou un mélange d'homopolymères d'acrylate d'éthyle et de méthacrylate de méthyle avec une proportion en poids d'acrylate d'éthyle de l'ordre de 55 %, ou du polyacétate de vinyle. Dans ces deux cas, la proportion en poids du constituant II est comprise entre 35 et 55 parties en poids pour 100 parties de polymère sec. En dessous de 35 parties, le caractère collant du revêtement formé est souvent encore marqué et au dessus de 55 parties, le revêtement obtenu, rigidifié, suit difficilement les déformations subies par les pneumatiques.

Le constituant II peut aussi être de l'alcool polyvinylique dans la proportion de 10 à 50 parties en poids pour 100 parties de polymère sec.

Selon un autre exemple, le constituant II est de la poly(N-vinyle-2-pyrrolidone) dans la proportion de 10 à 40 parties en poids pour 100 parties de polymère sec.

Dans ces deux derniers cas, lorsque la teneur en constituant II dépasse les valeurs maximales indiquées, le revêtement formé devient trop rigide ainsi que trop sensible à l'action de l'eau.

Le constituant II peut aussi être un copolymère d'alcool polyvinylique et de poly(N-vinyle-2-pyrrolidone).

Selon une autre variante de l'invention, la composition aqueuse peut comprendre, en plus du constituant I et d'un constituant II composé soit d'un copolymère ou d'un mélange d'homopolymères d'acrylate d'éthyle et de méthacrylate de méthyle avec une proportion en poids d'acrylate d'éthyle de l'ordre de 55 %, soit de polyacétate de vinyle, un constituant III constitué d'un homopolymère ou d'un copolymère vinylique soluble dans l'eau choisi dans le groupe des alcools polyvinyliques, des poly(N-vinyle-2-pyrrolidone) et des copolymères alcool vinylique/N-vinyle-2-pyrrolidone.

De préférence, le constituant III a une proportion inférieure ou égale à 40 parties en poids pour 100 parties de polymère sec.

L'ajout de ce constituant III permet d'améliorer le mouillage de la composition sur la surface caoutchoutique et la résistance mécanique du revêtement formé après séchage.

Avantageusement, cette variante de la composition selon l'invention d'au moins trois constituants I, II et III a pour 100 parties de polymère sec :
(a) de 50 à 75 parties de constituant I ;
(b) de 15 à 28 parties de constituant II ;
(c) de 7 à 25 parties de constituant III.

Les différentes variantes de composition aqueuse selon l'invention peuvent toutes avantageusement comprendre une silice hydrophile dans la proportion de 5 à 30 parties en poids pour 100 parties de polymère sec. Cette silice a un effet thixotrope qui facilite l'application de la composition aqueuse sur la surface caoutchoutique. D'autre part, le taux de silice présent dans la composition permet de faire évoluer l'aspect du revêtement obtenu après séchage d'un aspect brillant (taux de 0 à 10 parties environ) à un aspect mat (taux de l'ordre de 20 à 30 parties) en passant par toutes les nuances possibles.

Avantageusement, la composition aqueuse selon l'invention peut aussi inclure des agents tensioactifs pour favoriser le mouillage sur la surface caoutchoutique.

Les compositions précédentes ont l'avantage de produire des revêtements transparents qui ne masquent pas les différents marquages apposés sur les flancs des pneumatiques lors de leurs fabrications et de leurs tests, ces revêtements sont ainsi utilisables pour la protection de flancs blancs.

Pour donner un caractère esthétique particulier à la surface caoutchoutique protégée, la composition aqueuse selon l'invention peut aussi comprendre des pigments. En particulier, ces pigments peuvent être du noir de carbone (dans la proportion de 1 à 10 parties en poids pour 100 parties de polymère sec) pour éviter le blanchiment du revêtement obtenu après contact prolongé avec de l'eau ou dans les zones de déformations importantes.

De façon connue, cette composition aqueuse peut aussi inclure des agents anti-mousse pour faciliter l'application avec un pistolet.

Pour préparer une composition aqueuse selon l'invention, on introduit successivement dans un récipient :
- l'eau ;
- la silice, si nécessaire ;
- le noir de carbone ou tout pigment, si nécessaire ;
- l'agent tensioactif actif ;
- l'agent anti-mousse, si nécessaire ;
- l'alcool polyvinylique ou la polyvinyle pyrrolidone selon le cas et si nécessaire ;
- le constituant I ou les constituants I et II selon le cas.

L'introduction des constituants de la composition aqueuse se fait à froid. On agite avec des moyens connus jusqu'à obtenir une complète dispersion des produits de la composition aqueuse, puis on filtre l'émulsion obtenue à travers une toile en nylon de 150 µm pour éliminer d'éventuels petits grumeaux de matière mal dispersée.

L'application peut se faire par tous les moyens connus, et notamment au pinceau, au rouleau ou par pulvérisation avec un pistolet.

Pour avoir une bonne résistance mécanique du revêtement formé après le séchage de la composition aqueuse, il est essentiel d'appliquer la composition en une ou plusieurs couches minces successives. De bons résultats sont obtenus avec des revêtements secs d'une épaisseur totale comprise entre 1 et 30 µm. Préférentiellement, les revêtements ont une épaisseur de 3 à 15 µm.

De préférence, l'application est faite sur la surface extérieure de pneumatiques neufs pour garantir leur non coloration par la migration en surface d'agents chimiques antiozone au moins pendant toutes les opérations de transport, de stockage et de test jusqu'à leur mise en service.

De plus, comme la résistance mécanique du revêtement formé est élevée, ce revêtement peut résister à toutes les opérations précédentes et rester en place après la mise en service des pneumatiques et ainsi assurer pendant plusieurs milliers de kilomètres et/ou plusieurs mois par sa présence le maintien d'un aspect esthétique de qualité ainsi qu'une protection efficace contre l'ozone.

Même si le revêtement peut être sensible aux abrasions, chocs que peuvent subir les flancs des pneumatiques en service, il présente l'autre avantage de s'éliminer par usure sous forme d'une poudrette fine sans décollement d'une façon quasiment indécelable à l'oeil.

Bien entendu, le revêtement de protection ne peut pas être efficace sur toutes les parties du pneumatique en contact permanent avec le sol telle la bande de roulement car son usure est alors très rapide. Il est cependant très avantageux de le déposer sur l'ensemble de la surface car il revêt et protège la bande de roulement avant son utilisation et poursuit ensuite son action sur toutes les autres parties qui ne sont pas en contact avec le sol, telles les flancs et les fonds de creux des sculptures.

L'invention est illustrée au moyen des exemples ci-après qui ne sauraient constituer une limitation de sa portée.

Dans les exemples, les propriétés des compositions sont évaluées comme suit :
- "coloration/efflorescence" : test de l'aptitude du revêtement à s'opposer aux migrations en surface de tous les agents antiozone ;
- "manutention" : test de la résistance mécanique du revêtement lors d'opérations de manutention et de montage sur jante des pneumatiques (ce test impose des déformations de surface des flancs supérieures à 40 % d'extension) ;
- "tenue en dynamique" : test de la résistance mécanique du revêtement sous sollicitation dynamique, 12000 kilomètres sur une rouleuse avec une flèche imposée de 35 % à 60 kilomètres par heure, ce test impose une déformation dynamique en surface des flancs de l'ordre de 15 % d'extension ;
- "frottement " test de la résistance mécanique du revêtement lors d'opérations de frottement des pneumatiques les uns contre les autres ;
- "râpage trottoir" : frottement du flanc revêtu d'un pneumatique contre un trottoir pendant quelques mètres, test du mode d'élimination du revêtement due à un frottement mécanique, usure en poudrette ou décollement ;
- "eau" : test de la résistance du revêtement lors d'une immersion prolongée dans l'eau, c'est une simulation du stockage longue durée d'un véhicule sur un parking dans une flaque d'eau ;
- "chaleur" : test en étuve à 50°C de la résistance du revêtement pendant au moins six mois ;
- "tenue mécanique après vieillissement" : exposition aux intempéries de pneumatiques revêtus suivie d'un test de résistance mécanique du revêtement ;
- "vieillissement/aspect" : observation visuelle de l'aspect esthétique du revêtement après dépôt et en cours de vieillissement ;
- "lavage" : test de la résistance du revêtement au lavage par frottement avec une solution aqueuse additionnée de savon ;
- "dépôt" : appréciation de la facilité d'application de la composition sur une surface caoutchoutique.

Le tableau 1 présente les formulations des revêtements testés, et le tableau 2 les résultats obtenus. Les formulations sont présentées en prenant pour base 100 parties de polymère sec.

**TABLEAU 1**

| Composition | A | B | C | D | E | F | G | H | I | J | K | L |
|---|---|---|---|---|---|---|---|---|---|---|---|---|
| PVA⁽¹⁾ | 100 | | | | 40 | | | | | | 16 | |
| PVP⁽²⁾ | | | | | | 30 | | | | 16 | | 15 |
| AcBuSt⁽³⁾ | | 100 | 100 | 62 | 60 | 70 | 65 | 62 | 60 | 63 | 63 | 62 |
| AE/MM⁽⁴⁾ | | | | | | | 35 | 38 | 40 | 21 | 21 | |
| PVAc⁽⁵⁾ | | | | 38 | | | | | | | | 23 |
| silice⁽⁶⁾ | 16 | | 13 | | | | | 21 | 12 | 22 | 22 | 22 |
| glycérine | 16 | | | | | | | | | | | |
| tensioactif⁽⁷⁾ | 30 | 9 | 9,0 | 9 | 13 | 10 | 13 | 17 | 12 | 9 | 9 | 9 |
| anti-mousse ⁽⁸⁾ | | 12 | 12 | 12 | 26 | 20 | 12 | 17 | | 12 | 12 | 12 |
| noir N772 | | | | | | | | | | 8 | 8 | 8 |
| eau totale | 1800 | 250 | 370 | 630 | 1200 | 1000 | 310 | 530 | 690 | 630 | 630 | 620 |

| | | | | | | | | | | | | |
|---|---|---|---|---|---|---|---|---|---|---|---|---|
| ⁽¹⁾ alcool polyvinylique : Rhodoviol 25/140 (Rhône-Poulenc) (Tg : +49°C***) ; | | | | | | | | | | | | |
| ⁽²⁾ polyvinyle pyrrolidone : Luviskol K 90 (BASF) (Tg : environ +175°C*) ; | | | | | | | | | | | | |
| ⁽³⁾ émulsion aqueuse à 50 % d'un copolymère acrylate de butyle / styrène : Rhodopas GS 125 (Rhône-Poulenc) (Tg : -21°C**) ; | | | | | | | | | | | | |
| ⁽⁴⁾ émulsion aqueuse à 40 % d'un copolymère d'acrylate d'éthyle et de méthacrylate de méthyle (Tg :+34°C***) ; | | | | | | | | | | | | |
| ⁽⁵⁾ émulsion aqueuse à 54 % de polyacétate de vinyle (Tg : 28 à 31°C*) ; | | | | | | | | | | | | |
| ⁽⁶⁾ silice amorphe hydrophile : Aérosil 200 (Degussa) ; | | | | | | | | | | | | |
| ⁽⁷⁾ agent tensioactif non ionique : Octyl Phényl Polyoxyde d'éthylène (Cinnopal OP9 de Henkel) ; | | | | | | | | | | | | |
| ⁽⁸⁾ agent anti-mousse : BYK 070 (BYK). * Référence : Encyclopedia of Chemical Technology, 3ème édition, vol. 23. ** Référence : mesures Rhône-Poulenc. *** Référence : mesures internes. | | | | | | | | | | | | |

**TABLEAU 2**

| Composition | A | B | C | D | E | F | G | H | I | J | K | L |
|---|---|---|---|---|---|---|---|---|---|---|---|---|
| coloration efflorescence | +++ | ++ | ++ | ++ | +++ | +++ | +++ | +++ | +++ | +++ | +++ | +++ |
| manutention | --- | + | ++ | ++ | ++ | ++ | ++ | +++ | +++ | +++ | +++ | +++ |
| tenue en dynamique | --- | +++ | +++ | +++ | ++ | ++ | +++ | +++ | +++ | +++ | +++ | +++ |
| frottement | + | - | ++ | ++ | ++ | ++ | ++ | +++ | +++ | +++ | +++ | +++ |
| râpage trottoir | --- | + | ++ | ++ | ++ | ++ | ++ | +++ | +++ | +++ | +++ | +++ |
| eau | --- | +++ | +++ | + | + | + | +++ | +++ | +++ | +++ | +++ | +++ |
| chaleur | --- | + | ++ | +++ | ++ | +++ | +++ | +++ | +++ | +++ | +++ | +++ |
| vieillissement / tenue mécanique | --- | ++ | ++ | ++ | + | + | +++ | +++ | +++ | +++ | +++ | +++ |
| vieillissement / aspect | - | -- | ++ | + | ++ | ++ | ++ | +++ | +++ | +++ | +++ | +++ |
| lavage | --- | +++ | +++ | +++ | + | + | +++ | +++ | +++ | ++ | ++ | ++ |
| dépôt | +++ | + | ++ | + | ++ | ++ | ++ | ++ | ++ | +++ | +++ | +++ |

L'échelle d'appréciation des essais est la suivante :

| | | | |
|---|---|---|---|
| excellent | +++ | insuffisant | - |
| très bon | ++ | très insuffisant | -- |
| satisfaisant | + | inacceptable | -- |

Tous les revêtements formés avec les exemples de compositions présentés sont très bons à excellents dans le test de "coloration/efflorescence".

L'exemple A concerne une composition aqueuse à base d'alcool polyvinylique (PVA) additionné de plastifiant. Ce polymère a une température de transition vitreuse élevée (+ 49°C) et ne confère pas au revêtement formé un comportement caoutchoutique aux températures usuelles de manipulation et de stockage des pneumatiques. Le revêtement obtenu est excellent en résistance aux migrations et très bons pour sa facilité d'application, en revanche, il est inacceptable dans tous les tests où des déformations importantes lui sont imposées, en statique et en dynamique, à cause de sa trop grande rigidité, en dépit de la présence du plastifiant. Cette rigidité entraîne son décollement de la surface caoutchoutique qui le reçoit.

L'exemple B présente la solution la plus simple à base d'un copolymère d'acrylate de butyle / styrène. Ce polymère a une température de transition vitreuse de -21°C, en conséquence, le revêtement obtenu a un comportement caoutchoutique et est bien meilleur que le précédent dans tous les tests de résistance mécanique avec des déformations élevées en statique et en dynamique. Il n'est cependant que satisfaisant en test de manutention, insuffisant en test de frottement et très insuffisant en aspect lors du test de vieillissement à cause d'un caractère collant qui le pénalise en le rendant sensible aux frottements et aux salissures.

La composition C est une première solution pour corriger ce caractère collant grâce à l'ajout de silice. Le revêtement obtenu est très bon à excellent dans tous les tests.

Une autre solution est présentée avec le revêtement D, au moyen de polyacétate de vinyle. Relativement au revêtement C, D est meilleur en test de manutention et de résistance à la chaleur mais n'est qu'acceptable en résistance à l'eau à cause d'un blanchiment.

Les exemples E et F sont à base du même copolymère d'acrylate de butyle / styrène auquel est ajouté de l'alcool polyvinylique (E) ou de la polyvinyle pyrrolidone (F). Ces deux revêtements ont des comportements très proches et très bons à excellents dans tous les tests à l'exception des tests de résistance à l'eau, à un lavage et au vieillissement/tenue mécanique où ils sont acceptables. Cela est dû à la solubilité dans l'eau de ces deux polymères.

Le choix d'un copolymère d'acrylate d'éthyle et de méthacrylate de méthyle, comme second constituant de la composition aqueuse, correspond à l'exemple G. Le revêtement obtenu est meilleur que les deux précédents dans les tests de résistance à l'eau et au lavage. La résistance mécanique au vieillissement est elle aussi améliorée.

On peut améliorer encore les propriétés mécaniques et l'aspect du revêtement formé en ajoutant de la silice à la composition de l'exemple G, c'est l'exemple H.

Un exemple préférentiel de composition aqueuse selon l'invention est l'exemple I. Sa formulation est très proche de l'exemple H avec un taux de silice inférieur, ce qui donne un revêtement avec un aspect un peu plus brillant. Cette formulation ne comporte pas de produit anti-mousse et cela ne dégrade pas les propriétés de dépôt du film. Le revêtement obtenu est transparent, ce qui a l'avantage de ne pas masquer les marquages apposés sur le flanc des pneumatiques au cours de leur fabrication et de leurs tests. Ce revêtement est particulièrement adapté à la protection des flancs blancs qu'il valorise grâce à son aspect légèrement brillant. Il n'a pas à être enlevé lors de la mise en service du véhicule équipé des pneumatiques ainsi revêtus..

Les exemples J, K et L correspondent à trois autres variantes préférentielles selon l'invention. La composition aqueuse est alors à base d'un mélange de trois polymères :
- AcBuSt + AE/MM + PVP : exemple J ;
- AcBuSt + AE/MM + PVA : exemple K ;
- AcBuSt + PVAc + PVP : exemple L.

Les revêtements obtenus sont excellents dans tous les tests. Il est à noter que la résistance au lavage avec frottement en présence de savon est légèrement inférieure, mais il peut être utile de pouvoir facilement enlever le revêtement dans certains cas.

Dans tous les cas, la présence de silice améliore l'aspect du revêtement obtenu en lui donnant un aspect légèrement mat (exemples H, I, J, K et L). Enfin, la présence de noir de carbone dans les exemples J, K et L améliore la résistance au blanchiment en présence d'eau et aux fortes déformations.

Un dernier test spécifique de la résistance à l'ozone a été réalisé sur l'exemple J, le test dit "test Volkswagen". Ce test a pour but d'évaluer la résistance à l'ozone d'un flanc de pneumatique. Il s'agit d'un test statique réalisé sur une coupe de pneumatique de deux centimètres de large prélevée entre la tringle et les nappes sommet. La coupe ainsi réalisée est fixée sur un tube de 20 millimètres de rayon par un fil de laiton. La déformation de surface est de l'ordre de 12 %. Les éprouvettes ainsi conditionnées sont exposées en étuve ozone sous les conditions suivantes :

| | |
|---|---|
| Concentration ozone | 200 ± 15 pphm (part per hundred millions) |
| Humidité relative | 60 ± 5 % |
| Température | 25 ± 2 °C |
| Durée | 46 heures |

Le test est réussi lorsqu'une observation visuelle ne révèle aucune amorce de fissure.

Un pneumatique a été vieilli pendant quatre mois puis protégé par moitié par un revêtement selon l'invention. Des éprouvettes témoin - sans revêtement protecteur - et protégées ont alors été prélevées et testées.

Les éprouvettes témoin présentent des craquelures prononcées.
Les éprouvettes protégées n'ont aucune amorce de craquelure sur les zones protégées par le revêtement selon l'invention..

Ce test, le plus sévère de tous les tests demandés par les constructeurs automobiles, montre sans ambiguïté l'efficacité du revêtement de protection selon l'invention.

## Revendications

1. Procédé de protection antimigrations et antiozone de la surface d'un pneumatique dans lequel :
- on applique sur ladite surface une couche mince d'une composition aqueuse comprenant une émulsion aqueuse d'au moins :
(a) un polymère appelé constituant I, ledit constituant I étant un homopolymère ou un copolymère à base d'au moins un monomère choisi dans le groupe des esters acryliques, méthacryliques et vinyliques, et ayant une température de transition vitreuse inférieure à 0°C; et
(b) un constituant II choisi dans le groupe constitué par une silice hydrophile et un homopolymère ou un copolymère à base d'au moins un monomère choisi dans le groupe des monomères acryliques, méthacryliques et vinyliques, ledit homopolymère ou copolymère ayant une température de transition vitreuse supérieure à 25°C ; et
- on laisse sécher ladite couche jusqu'à la formation d'un revêtement tel que l'épaisseur dudit revêtement est comprise entre 1 et 30 µm.

2. Procédé de protection antimigrations et antiozone de la surface d'un pneumatique dans lequel :
- on applique sur ladite surface une couche mince d'une composition aqueuse comprenant une émulsion aqueuse d'au moins :
(a) un polymère appelé constituant I, ledit constituant I étant un homopolymère ou un copolymère à base d'au moins un monomère choisi dans le groupe des esters acryliques, méthacryliques et vinyliques, et ayant une température de transition vitreuse inférieure à 0°C ; et
(b) un constituant II, ledit constituant II étant un mélange d'homopolymères d'acrylate d'éthyle et de méthacrylate de méthyle ayant une température de transition vitreuse supérieure à 25°C ; et
- on laisse sécher ladite couche jusqu'à la formation d'un revêtement tel que l'épaisseur dudit revêtement est comprise entre 1 et 30 µm.

3. Procédé selon l'une des revendications 1 et 2, dans lequel le constituant I a une température de transition vitreuse inférieure à - 15°C.

4. Procédé selon la revendication 3, dans lequel le constituant I est un copolymère d'acrylate de butyle et de styrène avec une teneur en poids de styrène de l'ordre de 20 %.

5. Procédé selon l'une des revendications 1, 3 et 4, dans lequel le constituant II est une silice hydrophile dans la proportion de 5 à 25 parties en poids pour 100 parties de polymère sec.

6. Procédé selon la revendication 5, dans lequel la teneur en poids de silice hydrophile est comprise entre 10 et 15 parties pour 100 parties de polymère sec.

7. Procédé selon l'une des revendications 1, 3 et 4, dans lequel le constituant II est un copolymère d'acrylate d'éthyle et de méthacrylate de méthyle.

8. Procédé selon l'une des revendications 2 et 7, dans lequel le constituant II a une proportion en poids d'acrylate d'éthyle de l'ordre de 55 %.

9. Procédé selon l'une des revendications 1, 3 et 4, dans lequel le constituant II est du polyacétate de vinyle.

10. Procédé selon l'une des revendications 8 et 9, dans lequel la proportion en poids dudit constituant II est comprise entre 35 et 55 parties pour 100 parties de polymère sec.

11. Procédé selon l'une des revendications 1, 3 et 4, dans lequel le constituant II est de l'alcool polyvinylique dans la proportion de 10 à 50 parties en poids pour 100 parties de polymère sec.

12. Procédé selon l'une des revendications 1, 3 et 4, dans lequel le constituant II est de la poly(N-vinyle-2-pyrrolidone) dans la proportion de 10 à 40 parties en poids pour 100 parties de polymère sec.

13. Procédé selon l'une des revendications 2 et 7 à 9, comprenant en outre un constituant III, ledit constituant III étant un homopolymère ou un copolymère vinylique choisi dans le groupe des alcools polyvinyliques, des poly(N-vinyle-2-pyrrolidone) et des copolymères alcool vinylique/N-vinyle-2-pyrrolidone.

14. Procédé selon la revendication 13, dans lequel le constituant III a une proportion inférieure ou égale à 40 parties en poids pour 100 parties de polymère sec.

15. Procédé selon la revendication 14, ayant pour 100 parties en poids de polymère sec :
(a) de 50 à 75 parties de constituant I ;
(b) de 15 à 28 parties de constituant II ;
(c) de 7 à 25 parties de constituant III.

16. Procédé selon l'une des revendications 2 et 7 à 15, comprenant en plus une silice hydrophile dans la proportion de 5 à 30 parties en poids pour 100 parties de polymère sec.

17. Procédé selon l'une des revendications 1 à 16 comprenant en plus un noir de carbone dans la proportion de 1 à 10 parties en poids pour 100 parties de polymère sec.

18. Procédé selon l'une des revendications 1 à 17, dans lequel l'épaisseur de ladite couche déposée sur ladite surface caoutchoutique est telle que, après séchage, l'épaisseur dudit revêtement est comprise entre 3 et 15 µm.

## Patentansprüche

1. Verfahren zum Schutz der Oberfläche eines Luftreifens gegen Migrationen und gegen Ozon, wobei:
- auf die Oberfläche eine dünne Schicht einer wäßrigen Zusammensetzung aufgetragen wird, die eine wäßrige Emulsion mit mindestens den folgenden Bestandteilen enthält:
(a) einem als Bestandteil I bezeichneten Polymer, wobei der Bestandteil I ein Homopolymer oder ein Copolymer auf der Basis mindestens eines Monomers ist, das unter den Acrylestern, Methacrylestern und Vinylestern ausgewählt ist, und eine Glasübergangstemperatur unter O °C aufweist; und
(b) einem Bestandteil II, der unter hydrophilen Kieselsäuren und Homopolymeren oder Copolymeren auf der Basis mindestens eines Monomers ausgewählt ist, das unter den Acrylmonomeren, Methacrylmonomeren und Vinylmonomeren ausgewählt ist, wobei die Homopolymere oder Copolymere eine Glasübergangstemperatur über 25 °C aufweisen; und
- die Schicht bis zur Bildung eines Überzugs mit einer Dicke von 1 bis 30 µm trocknen gelassen wird.

2. Verfahren zum Schutz der Oberfläche eines Luftreifens gegen Migrationen und gegen Ozon, wobei:
- auf die Oberfläche eine dünne Schicht einer wäßrigen Zusammensetzung aufgebracht wird, die eine wäßrige Emulsion mit mindestens den folgenden Bestandteilen enthält:
(a) einem als Bestandteil I bezeichneten Polymer, wobei der Bestandteil I ein Homopolymer oder Copolymer auf der Basis mindestens eines Monomers ist, das unter den Acrylestern, Methacrylestern und Vinylestern ausgewählt ist, und eine Glasübergangstemperatur unter 0 °C aufweist; und
(b) einem Bestandteil II, wobei der Bestandteil II ein Gemisch von Homopolymeren von Ethylacrylat und Methylacrylat mit einer Glasübergangstemperatur über 25 °C ist; und
- die Schicht bis zur Bildung eines Überzugs mit einer Dicke im Bereich von 1 bis 30 µm trocknen gelassen wird.

3. Verfahren nach einem der Ansprüche 1 und 2, wobei der Bestandteil I eine Glasübergangstemperatur unter -15 °C aufweist.

4. Verfahren nach Anspruch 3, wobei der Bestandteil I ein Copolymer von Butylacrylat und Styrol mit einem Gewichtsanteil von Styrol in der Größenordnung von 20 % ist.

5. Verfahren nach einem der Ansprüche 1, 3 und 4, wobei der Bestandteil II eine hydrophile Kieselsäure in einer Menge von 5 bis 25 Gewichtsteilen pro 100 Teile trockenes Polymer ist.

6. Verfahren nach Anspruch 5, wobei der Gewichtsanteil der hydrophilen Kieselsäure im Bereich von 10 bis 15 Teilen pro 100 Teile trockenes Polymer liegt.

7. Verfahren nach einem der Ansprüche 1, 3 und 4, wobei der Bestandteil II ein Copolymer von Ethylacrylat und Methylmethacrylat ist.

8. Verfahren nach einem der Ansprüche 2 und 7, wobei der Bestandteil II einen Gewichtsanteil von Ethylacrylat in der Größenordnung von 55 % aufweist.

9. Verfahren nach einem der Ansprüche 1, 3 und 4, wobei der Bestandteile II Polyvinylacetat ist.

10. Verfahren nach einem der Ansprüche 8 und 9, wobei der Gewichtsanteil des Bestandteils II im Bereich von 35 bis 55 Teilen pro 100 Teile trockenes Polymer liegt.

11. Verfahren nach einem der Ansprüche 1, 3 und 4, wobei der Bestandteil II Polyvinylalkohol in Mengen von 10 bis 50 Gewichtsteilen pro 100 Teile trockenes Polymer ist.

12. Verfahren nach einem der Ansprüche 1, 3 und 4, wobei der Bestandteil II das Poly(N-vinyl-2-pyrrolidon) in Mengenanteilen von 10 bis 40 Gewichtsteilen pro 100 Teile trockenes Polymer ist.

13. Verfahren nach einem der Ansprüche 2 und 7 bis 9, wobei ferner ein Bestandteil III enthalten ist, wobei der Bestandteil III ein Vinylhomopolymer oder ein Vinylcopolymer ist, die unter den Polyvinylalkoholen, Poly(N-vinyl-2-pyrrolidonen) und Vinylalkohol/N-vinyl-2-pyrrolidon-Copolymeren ausgewählt sind.

14. Verfahren nach Anspruch 13, wobei der Bestandteil III in Mengenanteilen von höchstens 40 Gewichtsteilen pro 100 Teile trokkenes Polymer vorliegt.

15. Verfahren nach Anspruch 14, wobei pro 100 Gewichtsteile trokkenes Polymer vorliegen:
(a) 50 bis 75 Teile Bestandteil I;
(b) 15 bis 28 Teile Bestandteil II;
(c) 7 bis 25 Teile Bestandteil III.

16. Verfahren nach einem der Ansprüche 2 und 7 bis 15, wobei ferner hydrophile Kieselsäure in Anteilen von 5 bis 30 Gewichtsteilen pro 100 Teile trockenes Polymer vorliegen.

17. Verfahren nach einem der Ansprüche 1 bis 16, wobei ferner Ruß in Anteilen von 1 bis 10 Gewichtsteilen pro 100 Teile trokkenes Polymer vorliegt.

18. Verfahren nach einem der Ansprüche 1 bis 17, wobei die auf der Kautschukoberfläche abgeschiedene Schicht eine solche Dicke aufweist, daß die Dicke des Überzugs nach dem Trocknen im Bereich von 3 bis 15 µm liegt.

## Claims

1. A method for the anti-migration and anti-ozone protection of the surface of a tyre, in which:
- there is applied to said surface a thin layer of an aqueous composition comprising an aqueous emulsion of at least:
(a) a polymer called constituent I, said constituent I being a homopolymer or copolymer based on at least one monomer chosen from the group of acrylic, methacrylic and vinyl esters and having a glass transition temperature below 0°C; and
(b) a constituent II chosen from the group consisting of a hydrophilic silica and a homopolymer or copolymer based on at least one monomer chosen from the group of acrylic, methacrylic and vinyl monomers, said homopolymer or copolymer having a glass transition temperature above 25°C; and
- said layer is dried until a coating is formed such that the thickness of said coating is between 1 and 30 µm.

2. A method for the anti-migration and anti-ozone protection of the surface of a tyre, in which:
- there is applied to said surface a thin layer of an aqueous composition comprising an aqueous emulsion of at least:
(a) a polymer called constituent I, said constituent I being a homopolymer or copolymer based on at least one monomer chosen from the group of acrylic, methacrylic and vinyl esters and having a glass transition temperature below 0°C; and
(b) a constituent II, said constituent II being a mixture of ethyl acrylate and methyl methacrylate homopolymers having a glass transition temperature above 25°C; and
- said layer is dried until a coating is formed such that the thickness of said coating is between 1 and 30 µm.

3. A method according to one of Claims 1 and 2, in which the constituent I has a glass transition temperature below -15°C.

4. A method according to Claim 3, in which the constituent I is a styrene/butyl acrylate copolymer having a styrene content of the order of 20% by weight.

5. A method according to one of Claims 1, 3 and 4, in which the constituent II is a hydrophilic silica in the proportion of from 5 to 25 parts by weight per 100 parts of dry polymer.

6. A method according to Claim 5, in which the weight content of hydrophilic silica is between 10 and 15 parts per 100 parts of dry polymer.

7. A method according to one of Claims 1, 3 and 4, in which the constituent II is a copolymer of ethyl acrylate and methyl methacrylate.

8. A method according to one of Claims 2 and 7, in which the constituent II has an ethyl acrylate proportion by weight of the order of 55%.

9. A method according to one of Claims 1, 3 and 4, in which the constituent II is polyvinyl acetate.

10. A method according to one of Claims 8 and 9, in which the proportion by weight of said constituent II is between 35 and 55 parts per 100 parts of dry polymer.

11. A method according to one of Claims 1, 3 and 4, in which the constituent II is polyvinyl alcohol in the proportion of from 10 to 50 parts by weight per 100 parts of dry polymer.

12. A method according to one of Claims 1, 3 and 4, in which the constituent II is poly(N-vinyl-2-pyrrolidone) in the proportion of from 10 to 40 parts by weight per 100 parts of dry polymer.

13. A method according to one of Claims 2 and 7 to 9, furthermore comprising a constituent III, said constituent III being a vinyl homopolymer or copolymer chosen from the group of polyvinyl alcohols, poly(N-vinyl-2-pyrrolidone)s and vinyl alcohol/N-vinyl-2-pyrrolidone copolymers.

14. A method according to Claim 13, in which the constituent III has a proportion of less than or equal to 40 parts by weight per 100 parts of dry polymer.

15. A method according to Claim 14, having per 100 parts of dry polymer:
(a) from 50 to 75 parts of constituent I;
(b) from 15 to 28 parts of constituent II; and
(c) from 7 to 25 parts of constituent III.

16. A method according to one of Claims 2 and 7 to 15, furthermore comprising a hydrophilic silica in the proportion of 5 to 30 parts by weight per 100 parts of dry polymer.

17. A method according to one of Claims 1 to 16, furthermore comprising a carbon black in the proportion of from 1 to 10 parts by weight per 100 parts of dry polymer.

18. A method according to one of Claims 1 to 17, in which the thickness of said layer deposited on said rubber surface is such that, after drying, the thickness of said coating is between 3 and 15 µm.
